(19) Europäisches Patentamt / European Patent Office / Office européen des brevets

(11) **EP 4 632 766 A1**

(12) **EUROPEAN PATENT APPLICATION**
published in accordance with Art. 153(4) EPC

(43) Date of publication:
**15.10.2025 Bulletin 2025/42**

(21) Application number: **23900611.7**

(22) Date of filing: **04.12.2023**

(51) International Patent Classification (IPC):
**H01B 1/06** (2006.01)     **H01M 10/0562** (2010.01)

(52) Cooperative Patent Classification (CPC):
**H01B 1/06; H01M 10/0562**

(86) International application number:
**PCT/JP2023/043289**

(87) International publication number:
**WO 2024/122496 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.12.2022 JP 2022194535**

(71) Applicant: **Mitsui Mining & Smelting Co., Ltd.**
**Shinagawa-ku**
**Tokyo 141-8584 (JP)**

(72) Inventors:
• **OGATA, Yoichiro**
  **Ageo-shi, Saitama 362-0021 (JP)**
• **CHIKUMOTO, Takashi**
  **Ageo-shi, Saitama 362-0021 (JP)**
• **SAKURAGI, Shoichi**
  **Ageo-shi, Saitama 362-0021 (JP)**
• **TAKAHASHI, Tsukasa**
  **Ageo-shi, Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **SOLID ELECTROLYTE SHEET AND EVALUATION METHOD THEREFOR**

(57)     Provided is a solid electrolyte sheet including a solid electrolyte and having a transmittance of 1% or more at a wavelength of 680 nm. The sheet preferably has a transmittance of less than 1% at a wavelength of 420 nm. The sheet preferably has a thickness of 5 to 100 μm. The proportion of the solid electrolyte in the solid electrolyte sheet is preferably 60.0 to 99.9 mass%. The sheet preferably has self-supporting capability. A method for evaluating a solid electrolyte sheet including a solid electrolyte is also provided. The method includes evaluating a relative density of the solid electrolyte sheet on the basis of an optical transmittance of the solid electrolyte sheet when irradiated with light in a wavelength range of 200 nm or more and 1000 nm or less.

Fig. 1

EP 4 632 766 A1

## Description

### Technical Field

This invention relates to a solid electrolyte sheet and a method for evaluating the same.

### Background Art

In the production of solid-state batteries, such as solid-state lithium-ion batteries, a solid electrolyte sheet including mainly a solid electrolyte powder may be used as one of the components of solid-state batteries. For example, patent literature 1 below discloses a solid electrolyte sheet having a thickness of 100 μm or less and a lithium-ion conductivity of 0.5 mS/cm or more.

### Citation List

Patent Literature

Patent literature 1: JP 2018-129307A

### Summary of Invention

When producing a solid-state battery by using a solid electrolyte sheet including a solid electrolyte layer, it is important that the solid electrolyte layer have a high relative density. If the solid electrolyte layer has a low relative density, the apparent ionic conductivity or mechanical strength of the solid electrolyte sheet may be poor. Pressing the solid electrolyte sheet is one possible method for increasing the relative density of the sheet. However, it is not easy to assess whether a solid electrolyte sheet has an increased relative density on the basis of merely monitoring the pressing force when producing the sheet.

Accordingly, an object of the invention is to provide a solid electrolyte sheet of which the relative density level is easily evaluated and a method for evaluating the relative density of the solid electrolyte sheet.

The inventors have extensively studied to achieve the above object, and unexpectedly found that the relative density of the solid electrolyte layer is correlated with the optical transmittance of the layer. Based on this finding, the invention has been completed.

The invention provides a solid electrolyte sheet including a solid electrolyte and having an optical transmittance of 1% or more at a wavelength of 680 nm.

The invention also provides a method for evaluating a solid electrolyte sheet including a solid electrolyte. The method evaluates a relative density of the solid electrolyte sheet on the basis of an optical transmittance of the solid electrolyte sheet when irradiated with light in a wavelength range of 200 nm or more and 1000 nm or less.

### Brief Description of Drawing

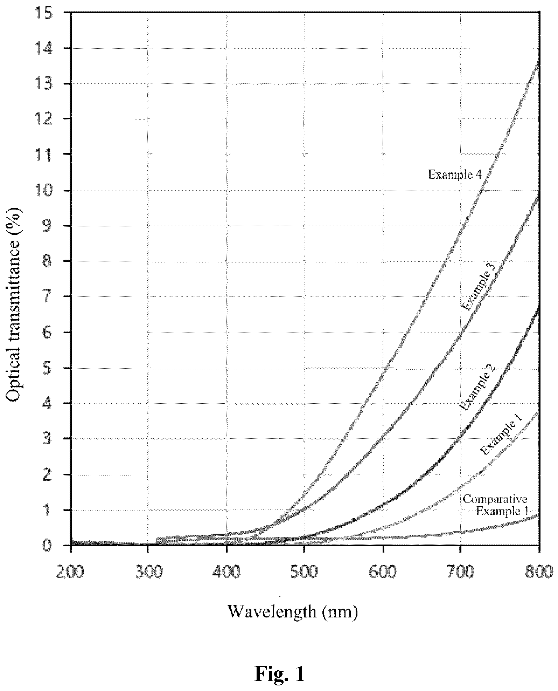

[Fig. 1] Fig. 1 is a graph showing the measurement result of the optical transmittances of the solid electrolyte sheets prepared in Examples and Comparative Example.

### Description of Embodiments

The invention will be described on the basis of its preferred embodiments.

The invention relates to a solid electrolyte sheet. The solid electrolyte sheet has an optical transmittance at a wavelength of 680 nm of 1% or more, preferably 3% or more, more preferably 5% or more. When the solid electrolyte sheet has an optical transmittance at 680 nm in the above range, the solid electrolyte sheet and thus the solid electrolyte itself have an improved relative density, and as a result, the solid electrolyte sheet and also the solid electrolyte itself have an improved ionic conductivity while keeping the electronic conductivity low, and also have an improved mechanical strength.

The upper limit of the transmittance at 680 nm of the solid electrolyte sheet is not particularly limited, and the transmittance at 680 nm may be 20% or less, 15% or less, or 10% or less, for example.

The solid electrolyte sheet preferably has a transmittance at 420 nm of less than 1%, more preferably less than 0.5%, even more preferably less than 0.1%. By measuring the transmittance at 420 nm of the solid electrolyte sheet, it can be determined whether any pinholes exist in the sheet. If the transmittance at 420 nm of the solid electrolyte sheet satisfies the above-described range, it can be determined that the solid electrolyte sheet is free of pinholes. The lower limit of optical transmittance is 0%.

As explained below, the relative density of the solid electrolyte in the solid electrolyte sheet varies with various factors, including the pressure applied when forming the sheet, the process for preparing a slurry containing the solid electrolyte, and the solid electrolyte material. Taking all of these factors into consideration, the inventors have found that the relative density of a solid electrolyte sheet can be directly and unambiguously determined on the basis of the optical transmittance of the solid electrolyte sheet in the solid electrolyte as an index, thereby achieving improvements in the above-mentioned physical properties.

As used herein, the term "relative density" denotes the value obtained by [density of sheet / true density $\times$ 100] (%) and is equivalent to [100 - porosity] (%). The method for measuring the relative density will be described in Examples given later.

The solid electrolyte sheet preferably has a thickness of 100 $\mu$m or less, more preferably 70 $\mu$m or less, even more preferably 50 $\mu$m or less. The thickness of the solid electrolyte sheet may be 5 $\mu$m or more, or 10 $\mu$m or more. When the solid electrolyte sheet has a thickness in the above range and is produced by the method described hereinbelow, the solid electrolyte sheet successfully has a transmittance within the above-described range. As a result, the solid electrolyte sheet and thus the solid electrolyte have an increased relative density, which improves the ionic conductivity while keeping the electronic conductivity low, and also improves the mechanical strength.

The thickness of the solid electrolyte sheet can be measured by microscopic observation of a cross-section of the solid electrolyte sheet or measured using a thickness gauge.

The invention also provides a method for evaluating a solid electrolyte sheet. The method includes measuring an optical transmittance of the solid electrolyte sheet when irradiated with light in the wavelength range of 200 nm or more and 1000 nm or less and evaluating a relative density of the solid electrolyte sheet on the basis of the optical transmittance. According to the method, in which a solid electrolyte sheet is irradiated with light in the wavelength range of 200 nm or more and 1000 nm or less including 680 nm, the relative density can be evaluated by measuring the transmittance of the solid electrolyte sheet. Specifically, if a solid electrolyte sheet has a higher transmittance at 680 nm, it can be determined that the solid electrolyte sheet has a higher relative density.

Since the above wavelength range includes 420 nm, whether any pinholes exist in the solid electrolyte sheet can also be determined by measuring the transmittance of the sheet. Specifically, if a solid electrolyte sheet has a lower transmittance at 420 nm, it can be determined that the solid electrolyte sheet has fewer pinholes.

The solid electrolyte sheet of the invention preferably includes a solid electrolyte and a support. Specifically, the solid electrolyte sheet preferably has a support and a solid electrolyte layer formed on at least one side of the support. Due to such a configuration, the solid electrolyte sheet has self-supporting capability and is thus easier to handle, and in addition, the measurement of transmittance by irradiating with light in the above-described wavelength range can be carried out more conveniently.

The proportion of the solid electrolyte in the solid electrolyte sheet is preferably at least 60.0 mass%, more preferably 70.0 mass% or more, even more preferably 80.0 mass% or more, and preferably 99.9 mass% or less, more preferably 99.5 mass% or less, even more preferably 99.0 mass% or less. When the proportion of the solid electrolyte in the solid electrolyte sheet falls within the above-described range, the transmittance measured by irradiating with light in the above-described wavelength range is substantially attributed to the solid electrolyte without any influences from the support. Thus, knowing the transmittances in the above-described wavelength range leads to knowing the improvements in the relative density, the ionic conductivity, and the mechanical strength of the solid electrolyte, as described above.

The solid electrolyte sheet preferably has a porosity of 30% or less, more preferably 20% or less, even more preferably 10% or less. The porosity may be, for example, 1% or more, or 2% or more. The solid electrolyte sheet having a porosity in the above-described range can reliably meet the above-described transmittance requirement.

The support is preferably a porous substrate. The term "porous" means having numerous pores. The porous substrate has a sheet form, and the pores are preferably continuous from one side of the porous substrate to the other. The pore sizes may be such that at least a portion of the particulate solid electrolyte can infiltrate and fill the pores in the formation of the solid electrolyte sheet. The pores may be interconnected.

Particularly, the porous substrate is preferably a fibrous substrate in view of providing the solid electrolyte sheet with sufficient self-supporting capability and moderate flexibility. Examples of the fibrous substrate includes nonwoven, woven, and knitted fabrics. Nonwoven fabric is particularly preferred. In the case of using a fibrous substrate as a support, the term "porous" means having interstitial spaces between fibers.

There are various types of nonwoven fabrics according to the kind of the fiber (including the fiber length and thickness, and the material for fiber), manufacturing processes (including web formation and web consolidation), and others. The types of the nonwoven fabric that can be used as a porous substrate are not particularly limited as long as a desired solid electrolyte sheet is provided. Examples of useful nonwoven fabrics include orthogonal, filament, staple, wet-laid, dry-laid, air-laid, carded, parallel-laid, cross-laid, random-laid, spun-bonded, melt-blown, flash-spun, chemical-bonded, hydroentangled, needle-punched, stich-bonded, thermal-bonded, burst fiber, tow-opening, split fiber, composite, complex, coated, and laminated nonwovens. Among them preferred is cross-laid nonwoven fabric because of the ease of adjusting the length (X-direction) to width (Y-direction) strength ratio and the basis weight. The strength of cross-laid nonwoven fabric is preferably equal in the X and Y directions. The basis weight of the cross-laid nonwoven fabric may be high or low. The cross-laid nonwoven fabric is exemplified by polyolefin mesh cloth (see JP 2007-259734A). The specific basis weights of the nonwoven fabrics may be the same as those described in JP 2018-129307A, and details thereof are not described here redundantly.

The material, porosity, air permeability, thickness, and so on of the porous substrate can be the same as those of porous substrates used in general solid electrolyte sheets, and specifically can be the same as those of, for example, the porous substrate disclosed in JP 2018-129307A. Thus, details thereof is not described here redundantly.

The solid electrolyte is formed into a layer that serves to conduct lithium ions between positive and negative electrode layersa in a solid-state battery. For this purpose, the solid electrolyte preferably includes a solid electrolyte containing a crystal phase having an argyrodite-type crystal structure, which is the crystal structure of a group of compounds derived from the mineral represented by chemical formula: $Ag_8GeS_6$. Whether a solid electrolyte has a crystal phase of an argyrodite-type crystal structure can be confirmed, for example, by X-ray diffractometry (XRD). For instance, the crystal phase having the argyrodite-type crystal structure exhibits characteristic diffraction peaks at $2\theta = 25.5° \pm 1.0°$, $30.0° \pm 1.0°$, and $30.9° \pm 1.0°$ in a diffraction pattern obtained by XRD with CuKα1 radiation. In addition to these peaks, characteristic peaks may be exhibited at $2\theta = 15.3° \pm 1.0°$, $18.0° \pm 1.0°$, $44.3° \pm 1.0°$, $47.2° \pm 1.0°$, $51.7° \pm 1.0°$, $58.3° \pm 1.0°$, $60.7° \pm 1.0°$, $61.5° \pm 1.0°$, $70.4° \pm 1.0°$, and $72.6° \pm 1.0°$, depending on the elemental species making up the solid electrolyte. The diffraction peaks assigned to the argyrodite-type crystal structure can be identified using, for example, the data in PDF No. 00-034-0688.

The solid electrolyte preferably contains at least a lithium element (L), a phosphorus element (P), and a sulfur element (S), more preferably at least Li, P, S, and a halogen element (X). In this case, the solid electrolyte is preferably represented by compositional formula (I): $Li_aPS_bX_c$, wherein X is at least one of a fluorine element (F), a chlorine element (Cl), a bromine element (B), and an iodine element (I), in view of improvement in Li-ion conductivity.

In formula (I), the subscript $a$ representing the Li molar ratio is preferably 3.0 or more, more preferably 4.0 or more, even more preferably 5.0 or more, and preferably 6.5 or less, more preferably 5.9 or less, even more preferably 5.6 or less. When the value $a$ is in this range, the cubic argyrodite-type crystal structure is more stable at or around room temperature (25°C), which allows sufficient Li-ion vacancies to be introduced into the structure, and as a result, increased Li-ion conductivity can be exhibited effectively.

In formula (I), the subscript $b$ is preferably 3.5 or more, more preferably 4.0 or more, even more preferably 4.2 or more, and preferably 5.5 or less, more preferably 4.9 or less, even more preferably 4.7 or less. When the value $b$ is in this range, the cubic argyrodite-type crystal structure is more stable at or around room temperature (25°C), and increased Li-ion conductivity can be exhibited effectively.

In formula (I), the subscript c is preferably 0.1 or more, more preferably 1.1 or more, even more preferably 1.4 or more, and preferably 2.5 or less, more preferably 2.0 or less, even more preferably 1.8 or less.

The solid electrolyte may be represented by compositional formula (II): $Li_{7-d}PS_{6-d}X_d$. The composition represented by formula (II) is the stoichiometric composition of an argyrodite-type crystal phase. In compositional formula (II), X is as defined above for formula (I).

In formula (II), the subscript $d$ is preferably 0.4 or more, more preferably 0.8 or more, even more preferably 1.2 or more and preferably 2.2 or less, more preferably 2.0 or less, even more preferably 1.8 or less.

The solid electrolyte may be represented by compositional formula (III): $Li_{7-a-2e}PS_{6-d-e}X_d$. The argyrodite-type crystal phase having the composition of formula (III) is formed, for example, by the reaction between an argyrodite-type crystal phase having the composition of formula (II) and diphosphorus pentasulfate ($P_2S_5$).

In formula (III), the subscript e indicates the deviation in terms of the $Li_2S$ component from the stoichiometric composition represented by Formula (II). The value e is preferably -0.9 or more, more preferably -0.6 or more, even more preferably -0.3 or more, and preferably (-d + 2) or less, more preferably (-d + 1.6) or less, even more preferably (-d + 1.0) or less.

The solid electrolyte preferably has an atomic ratio of the element X to phosphorus, X/P, greater than 1.0, more preferably 1.1 or more, even more preferably 1.2 or more, still even more preferably 1.4 or more, and preferably 2.5 or less, more preferably 2.3 or less, even more preferably 2.2 or less. When the atomic ratio X/P is within this range, further improved Li-ion conductivity is exhibited. The atomic ratio X/P can be determined by, for example, high-frequency inductively coupled plasma emission spectrometry (ICP emission spectrometry) or SEM-EDS analysis.

In particular, when the element X contains at least Cl and Br, the atomic ratio of Cl plus Br to P, (Cl + Br)/P, is preferably greater than 1.0, more preferably 1.1 or more, even more preferably 1.2 or more, still even more preferably 1.4 or more, and preferably 2.5 or less, more preferably 2.3 or less, even more preferably 2.0 or less. When the atomic ratio (Cl + Br)/P is in this range, further improved Li-ion conductivity is exhibited. The atomic ratio (Cl + Br)/P can be determined by, for example, high-frequency inductively coupled plasma emission spectrometry (ICP emission spectrometry) or elemental analysis using a scanning electron microscope equipped with an energy dispersive X-ray spectrometer (SEM-EDS).

Among the solid electrolytes of formulae (I) to (III), those represented by compositional formula (IV): $Li_{7-d}PS_{6-d}Cl_{d1}Br_{d2}$ are particularly preferred. In formula (IV), the total molar ratio $d$ of Cl and Br (= d1 + d2) is preferably greater than 1.0, more preferably 1.2 or more, even more preferably 1.4 or more, and preferably smaller than 2.5, more preferably smaller than 2.0, even more preferably 1.8 or less, still even more preferably 1.7 or less. When the total molar ratio $d$ is in the above range, formation of a different phase is suppressed sufficiently, thereby effectively preventing the reduction in ionic conductivity.

In the above formula, the molar ratio of Br to Cl, d2/d1, is preferably 0.1, more preferably 0.3 or more, even more preferably 0.5 or more, and preferably 10 or less, more preferably 5 or less, even more preferably 3 or less. When the d2/d1 is in the above range, further improved Li-ion conductivity is exhibited.

In the above formula, the subscript d1, which represents the molar ratio of Cl, is preferably 0.3 or more, more preferably 0.4 or more, even more preferably 0.6 or more, and preferably 1.5 or less, more preferably 1.2 or less, and even more preferably 1.0 or less. When d1 is not less than the above-described lower limit, further improved Li-ion conductivity is exhibited. When d1 is not more than the above-described upper limit, the solid electrolyte is easily obtained.

In the above formula, the subscript d2, which represents the molar ratio of Br, is preferably 0.3 or more, more preferably 0.4 or more, even more preferably 0.6 or more, and preferably 1.5 or less, more preferably 1.2 or less, even more preferably 1.0 or less. When d2 is not smaller than the above-described lower limit, the solid electrolyte is obtained easily. When d2 is not greater than the above-described upper limit, further improved Li-ion conductivity is exhibited.

It is preferred for any of the solid electrolytes of formulae (I) through (IV) to contain Br as the element X, in view of further improvement in Li-ion conductivity.

A preferred method for producing the solid electrolyte sheet of the invention will next be described. The method broadly includes the steps of (1) providing a lamina precursor, (2) preparing a stack having the lamina precursor, (3) pressing the stack, and (4) removing the carrier sheet from the stack. These steps will be described below.

Step 1: Providing a lamina precursor

In this step, a lamina precursor is provided, the lamina precursor having a carrier sheet and a coating containing a solid electrolyte and formed on the carrier sheet. It is preferred that the carrier sheet be strong enough to support the coating and also be flexible.

The thickness of the carrier sheet is selected as appropriate to the material of the carrier sheet and is preferably enough to impart self-supporting capability to the carrier sheet. The carrier sheet may have flexibility, which can be brought about by adjusting its thickness. The thickness of the carrier sheet is not particularly limited. For example, the thickness may be 10 μm or more, or 15 μm or more, or 18 μm or more, and may be 40 μm or less, 30 μm or less, or 22 μm or less.

The material of the carrier sheet is preferably at least one of resins, glass, and metals. Namely, the carrier sheet preferably includes at least one of a resin carrier, a glass carrier, and a metal foil carrier. The carrier sheet may have a multilayer structure composed of two or more of a resin carrier, a glass carrier, and a metal foil carrier.

Examples of the material of the resin carrier include acrylic resins, polyester resins, cellulose derivative resins, polyvinyl acetal resins, polyvinyl butyral resins, vinyl chloride-vinyl acetate copolymer resins, chlorinated polyolefins, and copolymers derived from any monomers for these resins.

Examples of the glass carrier includes glass cloth, i.e., woven glass fiber.

Examples of the material of the metal foil carrier include copper, stainless steel, aluminum, nickel, silver, gold, chromium, cobalt, tin, zinc, brass, and alloys thereof.

The coating may be applied directly to the carrier sheet without any other layer between them, or there may be one or more additional layers between the carrier sheet and the coating. In either case, the coating and the carrier sheet are preferably separable. The term "separable" means that the coating and the carrier sheet can be separated from each other without breaking their structures. The peel strength between the carrier sheet and the coating is preferably 10 N/10 mm or less, more preferably 7 N/10 mm or less, even more preferably 4 N/10 mm or less. When the peel strength is in this range, the carrier sheet and the coating are smoothly separated from each other. The peel strength is measured by, for example, cutting a laminate having the layers of interest into a 10 mm-wide strip and carrying out delamination test on it (180° peel; test speed 50 mm/min) using a tensile/compression tester.

Of the two major surfaces of the carrier sheet, one that is to face the coating can be subjected to release treatment so that the carrier sheet and the coating are separably laminated together. The release treatment can be carried out by smoothing the surface or by applying a release agent containing resin.

The coating formed on the carrier sheet contains a solid electrolyte and a solvent. Examples of the solvent include nonpolar solvents, such as heptane, methylcyclohexane, and toluene; aprotic polar solvents, such as methyl isobutyl ketone and cyclohexanone; and mixtures thereof.

The solid electrolyte in the coating has a particulate form. The particle size of the solid electrolyte in terms of $D_{50}$, the diameter at 50% of the cumulative volume in laser diffraction particle size distribution analysis, is preferably 0.3 μm or more, more preferably 0.5 μm or more, even more preferably 0.7 μm or more, and preferably 10 μm or less, more preferably 6 μm or less, even more preferably 4 μm or less.

The solid electrolyte and the solvent may be mixed using apparatus, including ultrasonic homogenizers, shakers, high-speed thin-film mixers, dissolvers, homomixers, kneaders, roll mills, sand mills, attritors, ball mills, vibratory mills, and high-speed impeller mills.

After the solid electrolyte and the solvent are thus mixed with each other, the resulting mixture (slurry) is applied to one side of the carrier sheet. Examples of the application method include doctor blade coating, die coating, gravure coating, spray coating, electrostatic coating, and bar coating. By applying the slurry to one side of the carrier sheet, a coating is formed thereon.

In light of the coating properties of the slurry, the coating thus formed preferably has a solid content of 20 mass% or more, more preferably 25 mass% or more, even more preferably 30 mass% or more, and preferably 70 mass% or less, more preferably 65 mass% or less.

The liquid component of the coating may be removed to a moderate degree. Examples of the method for removing the liquid component include warm air drying, hot air drying, infrared drying, vacuum drying, and induction heating drying. There is thus provided a lamina precursor composed of the carrier sheet and the solid electrolyte-containing coating formed on the carrier sheet.

Step 2: Preparing a stack having the lamina precursor

The lamina precursor obtained in step 1 is put on a support, such as the porous substrate described above, to obtain a stack including the support and the lamina precursor thereon. On this occasion, the lamina precursor is put on the support such that the coating of the lamina precursor faces the support. Part of the coating, which contains a moderate amount of the solvent, infiltrates into the support, e.g., the porous substrate to fill the pores. The infiltration of the coating is ensured by the subsequent pressing step.

Step 3: Pressing the stack

The purpose of pressing the stack is to ensure that the solid electrolyte sheet to be finally obtained has a transmittance in the specified range described above when irradiated with light of the specified wavelength described above. At the same time, when a porous substrate is used as the support, the pressing ensures that at least part of the coating, i.e., the particulate solid electrolyte infiltrates and fills the pores of the porous substrate. For this purpose, the stack can be pressed at least in the thickness direction. For example, a uniaxial press can be used to press the stack in the thickness direction, or alternatively, the entire stack can be isotropically pressed by cold isotropic pressing (ICP).

By step 3, the solid electrolyte layer of the solid electrolyte sheet acquires an increased relative density, and therefore improved ionic conductivity while electronic conductivity kept low, and also acquires improved mechanical strength. In other words, the solid electrolyte sheet has a transmittance of 1% or higher at 680 nm.

Step 4: Removing the carrier sheet from the stack

The carrier sheet is stripped off the pressed stack. By stripping the carrier sheet off the pressed stack, there is provided a desired solid electrolyte sheet, i.e., a solid electrolyte sheet composed of the support and the solid electrolyte on the support.

A battery having the solid electrolyte sheet of the invention will then be described. The solid electrolyte sheet is interposed between a positive electrode layer and a negative electrode layer.

The positive electrode layer may include, for example, elemental sulfur. Otherwise, the positive electrode layer may include a positive electrode active material conventionally known for lithium-ion batteries. Examples of such a positive electrode active material include oxide active materials containing lithium and a transition metal. Specific examples thereof include layered rock-salt type active materials, such as lithium cobaltate ($LiCoO_2$), lithium nickelate ($LiNiO_2$), and $LiNi_{1/3}Co_{1/3}Mn_{1/3}O_2$; spinel type active materials, such as lithium manganate ($LiMn_2O_4$), $Li(Ni_{0.5}Mn_{1.5})O_4$, and $Li_{1+x}Mn_{2-x-y}M_yO_4$ (where M is at least one member selected from the group consisting of Al, Mg, Co, Fe, Ni, and Zn); and olivine type active materials, such as lithium titanate ($Li_xTiO_y$), $LiFePO_4$, $LiMnPO_4$, $LiCoPO_4$, and $LiNiPO_4$.

The negative electrode layer may include metallic lithium, for example. Otherwise, the negative electrode layer may include a material from which lithium is precipitated by charges and discharges of batteries. Otherwise, the negative electrode layer may include a composition containing a lithium-absorbing material, such as graphite.

In the light of the above-described embodiments, the solid electrolyte sheet and the evaluation method of the following clauses are encompassed by the disclosed invention.

1. A solid electrolyte sheet including a solid electrolyte and having an optical transmittance of 1% or more at a wavelength of 680 nm.
2. The solid electrolyte sheet as set forth in clause 1, having an optical transmittance of less than 1% at a wavelength of 420 nm.

3. The solid electrolyte sheet as set forth in clause 1 or 2, having a thickness of 5 $\mu$m or more and 100 $\mu$m or less.

4. The solid electrolyte sheet as set forth in any one of clauses 1 to 3, wherein the proportion of the solid electrolyte in the solid electrolyte sheet is 60.0 mass% or more and 99.9 mass% or less.

5. The solid electrolyte sheet as set forth in any one of clauses 1 to 4, having self-supporting capability.

6. The solid electrolyte sheet as set forth in any one of clauses 1 to 5, further comprising a support.

7. The solid electrolyte sheet as set forth in clause 6, wherein the support is a porous substrate, and pores of the porous substrate are filled with the solid electrolyte.

8. The solid electrolyte sheet as set forth in any one of clauses 1 to 7, having a porosity of 30% or less.

9. The solid electrolyte sheet as set forth in any one of clauses 1 to 8, wherein the solid electrolyte contains a crystal phase having an argyrodite-type crystal structure.

10. A method for evaluating a solid electrolyte sheet including a solid electrolyte, the method comprising evaluating a relative density of the solid electrolyte sheet on the basis of an optical transmittance of the solid electrolyte sheet when irradiated with light in a wavelength range of 200 nm or more and 1000 nm or less.

## Examples

### Example 1

A Li-ion conductive sulfide powder represented by compositional formula: $Li_6PS_5Cl_{0.5}Br_{0.5}$ and containing a crystal phase of an argyrodite-type crystal structure was provided as a solid electrolyte. The sulfide powder and a rubber binder were weighed out in a mass ratio of 99:1 and mixed with an organic solvent to prepare a slurry. The slurry was applied to a 10 $\mu$m-thick SUS foil as a carrier sheet using a doctor blade with a 100 $\mu$m gap to form a coating. The resulting coating was vacuum dried at 120°C to obtain lamina precursor consisting of the carrier sheet and the coating.

A 30 $\mu$m-thick nonwoven fabric as a support was sandwiched between a pair of the lamina precursors to make a stack. On this occasion, the lamina precursors and the support were stacked such that the coating of each lamina precursor faced the support. The stack was pressed by passing through a desktop thermal roll press HSR-60150H (from Hohsen Corp.) with a roll clearance of 40 $\mu$m at a roll temperature of 80°C. The carrier sheet was then removed from the stack to provide a solid electrolyte sheet having the support.

### Example 2

A stack was prepared in the same manner as in Example 1. The stack was sealed in an aluminum-laminated bag and pressed at a pressure of 700 MPa using a cold isotropic press available from Kobe Steel, Ltd. instead of the desktop thermal roll press. The stack was taken out of the bag, and the carrier sheet was removed from the stack to provide a solid electrolyte sheet having the support.

### Example 3

A stack was prepared in the same manner as in Example 1. The stack was pressed using a load control type roll press (available from Sintokogio, Ltd.), instead of the desktop thermal roll press, under a linear pressure of 10 kN/cm at a roll temperature of 120°C. The carrier sheet was removed from the stack to form a solid electrolyte sheet having the support.

### Example 4

A solid electrolyte sheet was obtained in the same manner as in Example 3, except for changing the linear pressure to 16 kN/cm.

### Comparative Example 1

A solid electrolyte sheet was obtained in the same manner as in Example 1, except for changing the roll clearance of the desktop thermal roll press to 60 $\mu$m.

The optical transmittance of the solid electrolyte sheets obtained in Examples and Comparative Example was measured as follows.

Each solid electrolyte sheet was placed on a spectrophotometer U-4100 (from Hitachi High-Tech Corp). The measurement was performed in transmission mode (setting: start wavelength 1000 nm, stop wavelength 200 nm) at a scanning speed of 300 nm/min. The measurement results are shown in Fig. 1.

The relative density of each of the solid electrolyte sheets obtained in Examples and Comparative Example was determined in the following manner.

A 25 mm side square piece was cut from the solid electrolyte sheet and weighed with an electronic balance. At five points in the 25 mm side square cut piece, the thickness of the cut piece was measured with a micrometer, and the arithmetic mean of the five measurements was used as the average thickness. The density of the sheet was calculated using the following formula:

$$\text{Density of sheet (kg/m}^3) = \text{mass (kg)}/[0.025^2 \times \text{average thickness (m)}]$$

The relative density was calculated by the following formula:

$$\text{Relative density (\%)} = \text{density of sheet / true density of sheet} \times 100 \text{ (\%)}$$

The true density of the sheet was calculated from the true densities of the solid electrolyte and the binder and their mixing ratio. The results of the calculations are shown in Table 1 below.

The porosity was calculated using the following formula:

$$\text{Porosity (\%)} = 100 - \text{relative density (\%)}$$

Each of the solid electrolyte sheets obtained in Examples and Comparative Example was examined for whether any pinholes existed therein. As a result, it was confirmed that no pinholes existed in any of the solid electrolyte sheets obtained in Examples and Comparative Example.

**Table 1**

|  | Relative Density (%) | Transmittance at 680 nm (%) | Transmittance at 420 nm (%) |
|---|---|---|---|
| Example 1 | 61 | 1.3 | 0.008 |
| Example 2 | 73 | 2.6 | 0.04 |
| Example 3 | 85 | 5.3 | 0.37 |
| Example 4 | 94 | 8.0 | 0.15 |
| Comp. Example 1 | 55 | 0.33 | 0.2 |

The results shown in Table 1 and Fig. 1 clearly prove that the transmittance at 680 nm and the relative density of the solid electrolyte sheets are positively correlated with each other. Therefore, it is seen that, according to the invention, the relative density of the solid electrolyte sheet can be evaluated on the basis of the transmittance of the sheet. It is also seen that whether the solid electrolyte sheet has pinholes can be determined on the basis of the transmittance at 420 nm of the sheet.

**Reference Example**

A solid electrolyte sheet was obtained in the same manner as in Example 1, except that the roll temperature of the desktop thermal roll press was set at room temperature. The resulting solid electrolyte sheet had a transmittance of 13.7% at 680 nm and 12.9% at 420 nm. Several pinholes were created in the step of removing the carrier sheet after the pressing.

**Industrial Applicability**

The invention provides a solid electrolyte sheet the relative density of which can be easily evaluated. The solid electrolyte sheet of the invention has a high relative density, which means high ionic conductivity and high mechanical strength.

**Claims**

1.    A solid electrolyte sheet comprising a solid electrolyte and having an optical transmittance of 1% or more at a wavelength of 680 nm.

2. The solid electrolyte sheet according to claim 1, having an optical transmittance of less than 1% at a wavelength of 420 nm.

3. The solid electrolyte sheet according to claim 1 or 2, having a thickness of 5 $\mu$m or more and 100 $\mu$m or less.

4. The solid electrolyte sheet according to claim 1 or 2, wherein the proportion of the solid electrolyte in the solid electrolyte sheet is 60.0 mass% or more and 99.9 mass% or less.

5. The solid electrolyte sheet according to claim 1 or 2, having self-supporting capability.

6. The solid electrolyte sheet according to claim 1 or 2, further comprising a support.

7. The solid electrolyte sheet according to claim 6, wherein the support is a porous substrate, and pores of the porous substrate are filled with the solid electrolyte.

8. The solid electrolyte sheet according to claim 1 or 2, having a porosity of 30% or less.

9. The solid electrolyte sheet according to claim 1 or 2, wherein the solid electrolyte contains a crystal phase having an argyrodite-type crystal structure.

10. A method for evaluating a solid electrolyte sheet including a solid electrolyte,
    the method comprising evaluating a relative density of the solid electrolyte sheet on the basis of an optical transmittance of the solid electrolyte sheet when irradiated with light in a wavelength range of 200 nm or more and 1000 nm or less.

**Fig. 1**

## INTERNATIONAL SEARCH REPORT

| International application No. |
| --- |
| **PCT/JP2023/043289** |

**A. CLASSIFICATION OF SUBJECT MATTER**

***H01B 1/06***(2006.01)i; ***H01M 10/0562***(2010.01)i
FI:  H01B1/06 A; H01M10/0562

According to International Patent Classification (IPC) or to both national classification and IPC

**B. FIELDS SEARCHED**

Minimum documentation searched (classification system followed by classification symbols)

H01B1/06; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-57317 A (MITSUBISHI MATERIALS CORP) 08 April 2021 (2021-04-08) paragraphs [0018]-[0069], fig. 1-3 | 1, 3, 5-6 |
| Y | | 4, 8-9 |
| A | | 2, 7 |
| X | JP 2016-27563 A (DENSO CORP) 18 February 2016 (2016-02-18) paragraphs [0014]-[0103], fig. 1-12 | 1, 3-5 |
| Y | | 4, 8-9 |
| A | | 2, 6-7 |
| Y | WO 2021/085239 A1 (MITSUI MINING & SMELTING CO., LTD.) 06 May 2021 (2021-05-06) paragraph [0034] | 8 |
| Y | WO 2022/186155 A1 (MITSUI MINING & SMELTING CO., LTD.) 09 September 2022 (2022-09-09) paragraph [0013] | 9 |

☐ Further documents are listed in the continuation of Box C.      ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **02 February 2024** | **13 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2023/043289**

**Box No. III    Observations where unity of invention is lacking (Continuation of item 3 of first sheet)**

This International Searching Authority found multiple inventions in this international application, as follows:

Document 1: JP 2021-57317 A (MITSUBISHI MATERIALS CORP) 08 April 2021 (2021-04-08) paragraphs [0018]-[0069], fig. 1-3 (Family: none)
Document 2: JP 2016-27563 A (DENSO CORP) 18 February 2016 (2016-02-18) paragraphs [0014]-[0103], fig. 1-12 (Family: none)

Claims are classified into the following two inventions.

(Invention 1) Claims 1-9
    Document 1 discloses a laminate 11 (corresponding to a "solid electrolyte sheet") comprising: a positive electrode current collector layer 14, a positive electrode layer 16, a solid electrolyte layer 18 (corresponding to a "solid electrolyte"), a negative electrode layer 20, and a negative electrode current collector layer 22, wherein the laminate 11 has a transmittance of visible light (wavelength: about 380 nm to 810 nm) of 60% or more (paragraphs [0024]-[0025], fig. 1).
    Document 2 indicates that the absorbance coefficient, which is determined from the transmittance of a light beam having a wavelength range of 380 nm or more relative to a solid electrolyte having a thickness of 0.8 mm (corresponding to a "solid electrolyte sheet"), is 6.6 $mm^{-1}$ or less, preferably 1.7 $mm^{-1}$ or less, wherein in the solid electrolyte having an absorbance coefficient of 6.6 $mm^{-1}$ or less, the transmittance measured by a transmittance measuring device is 0.5% or more, and in the solid electrolyte having an absorbance coefficient of 1.7 $mm^{-1}$ or less, the transmittance measured by a transmittance measuring device is 25% or more (that is, the transmittance of the solid electrolyte is 0.5% or more, and preferably 25% or more) (paragraphs [0015]-[0018]).
    Therefore, claim 1 lacks novelty in light of document 1 or document 2, and thus does not have a special technical feature. However, claim 2, which is dependent on claim 1, has the special technical feature in that the "transmittance of light having a wavelength of 420 nm is less than 1%." Therefore, claims 1-2 are classified as invention 1.
    Claims 3-9 are dependent on claim 1 and are inventions related to claim 1, and are thus classified as invention 1.

(Invention 2) Claim 10
    Claim 10 cannot be said to have a special technical feature identical or corresponding to that of claim 2 classified as invention 1.
    In addition, claim 10 is not dependent on claim 1. In addition, claim 10 is not substantially identical to or similarly closely related to any of the claims classified as invention 1.
    Therefore, claim 10 cannot be classified as invention 1.
    In addition, claim 10 has the special technical feature of a "method for evaluating a solid electrolyte sheet, the method evaluating a relative density of the solid electrolyte sheet on the basis of the transmittance of light in a wavelength region of 200 nm to 1,000 nm when the solid electrolyte sheet containing the solid electrolyte is irradiated with said light in the wavelength region."

Form PCT/ISA/210 (continuation of first sheet) (July 2022)

**INTERNATIONAL SEARCH REPORT**

| International application No. |
| --- |
| **PCT/JP2023/043289** |

| **Box No. III** | **Observations where unity of invention is lacking (Continuation of item 3 of first sheet)** |

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-9**

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

INTERNATIONAL SEARCH REPORT
Information on patent family members

International application No.

**PCT/JP2023/043289**

| Patent document cited in search report | | | Publication date (day/month/year) | Patent family member(s) | Publication date (day/month/year) |
|---|---|---|---|---|---|
| JP | 2021-57317 | A | 08 April 2021 | (Family: none) | |
| JP | 2016-27563 | A | 18 February 2016 | (Family: none) | |
| WO | 2021/085239 | A1 | 06 May 2021 | EP 4053946 A1 paragraphs [0038]-[0039] US 2022/0416292 A1 CN 114556655 A KR 10-2022-0088689 A | |
| WO | 2022/186155 | A1 | 09 September 2022 | EP 4303956 A1 paragraphs [0018]-[0019] CN 116868283 A KR 10-2023-0136148 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018129307 A

- JP 2007259734 A